(19) **Europäisches Patentamt**
**European Patent Office**
**Office européen des brevets**

(11) **EP 1 906 579 A2**

(12) **EUROPEAN PATENT APPLICATION**

(43) Date of publication:
**02.04.2008 Bulletin 2008/14**

(51) Int Cl.:
*H04L 1/00* (2006.01)          *H04L 27/00* (2006.01)

(21) Application number: **07253645.1**

(22) Date of filing: **13.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **29.09.2006 JP 2006266483**

(71) Applicant: **Sharp Kabushiki Kaisha**
**Osaka-shi, Osaka 545-8522 (JP)**

(72) Inventor: **Arnaud, Santraine**
**Tenri-shi,**
**Nara 632-0004 (JP)**

(74) Representative: **Brown, Kenneth Richard et al**
**R.G.C. Jenkins & Co.**
**26 Caxton Street**
**London SW1H 0RJ (GB)**

(54) **Method and apparatus for transmitting data and method and apparatus for receiving data**

(57) Data transmission rate can be improved by maintaining an average power for data transmission within a certain range and using a plurality of modulation schemes to use an actual S/N ratio of a transmission line effectively. A transmitter (101) comprises a modulation scheme controlling means (102) for determining usage ratios and increase/decrease coefficients so that the average transmitted power is lower than a predetermined level and the average bit rate is higher than that when one modulation scheme is assigned to all the data segments where the predetermined level of the average transmitted power and the maximum error rate remain unchanged, selectively assigning one modulation scheme to the data segment according to the usage ratio to divide the data into the data segments, and a modulation circuit means (103) for subjecting the data segments to digital modulation with the modulation schemes and modifying its output according to the increase/decrease coefficient.

Fig. 4

## Description

BACKGROUND OF THE INVENTION

1. Field of the Invention

The present invention relates to a method and an apparatus for transmitting and receiving data, and more particularly, to a method and an apparatus for transmitting and receiving data at a level of transmission quality determined by a uniform error rate under limitation of the average power for data transmission while increasing the data transmission rate with the help of a finite combination of modulation schemes. The present invention further relates to a method and an apparatus for transmitting and receiving data which are applicable to a multi-carrier modulation/demodulation scheme.

2. Description of the Related Art

A variety of data communication systems have been developed for transmitting data at a uniform error rate to each end user. It is known for ensuring the quality of service (QoS) required in the data communication to specify the quality characteristic of a transmission line used for the data communication through measuring, commonly, an S/N (signal-to-noise) ratio and the like and selectively determine one of the applicable modulation schemes favorable for satisfying a desired level of the quality of service QoS pertinent to the quality characteristic of the specified transmission line thus to establish a maximum of the data transmission rate (as disclosed in, for example, U. S. Patent Nos. 5479447 and 5596604). The applicable modulation schemes satisfy the quality of service QoS when the S/N ratio (an S/N ratio threshold) required for transmission characteristic (the number of multilevel modulation values: the data size per symbol) of each modulation scheme is predetermined and the modulation schemes are used in transmission lines where the S/N ratio indicating the quality characteristic of the transmission line is not lower than the S/N ratio threshold. In most communication systems, the number of applicable modulation schemes is limited in terms of the practical use and any significant difference in the S/N ratio threshold among the applicable modulation schemes should be avoided. More particularly, there may be a trouble when the S/N ratio threshold in the selected modulation scheme is significantly different from the actual S/N ratio of the transmission line. Since an excess of the actual S/N ratio of the transmission line over the S/N ratio threshold is not applied to the data transmission, the data transmission capability of the transmission line will not be effectively utilized.

When the average power required for transmitting the data is not strictly limited, each symbol (a basic unit of signal waveform after the digital modulation) can be conveyed with the actual S/N ratio of the transmission line used effectively by increasing the signal power slightly so that the S/N ratio of the transmission line comes up to the second largest of the S/N ratio thresholds of the applicable modulation schemes (See, for example, U. S. Patent No. 6075821). However, the power for the transmission is strictly prescribed by a regulatory authority according to some communication standards and the increase in the power for transmission of the symbols will hardly be permitted.

In view of the above problems, some attempts have been made to assign a considerable number of applicable modulation schemes to a communication system and minimize a difference in the S/N ratio thresholds among the modulation schemes to improve the data transmission rate. Even if these attempts employing a lot of the applicable modulation schemes are useful for the additional limitations provided by other design and parameter modifications, the transmitters and the receivers become more complex in the structural arrangement.

Other conventional systems are provided for utilizing an excess of the actual S/N ratio of the transmission line from the S/N ratio threshold by transmitting information symbols obtained by pre-encoding or linearly synthesizing some data streams in an encoded form at the transmitter side and subjecting the received information symbols to an inverse synthesis or pre-decoding at the receiver side (See, for example, U. S. Patent No. 6985534). However, those systems require massive arithmetic operations and will thus lower the quality of the communication due to unwanted artifacts such as correlated noises on the transmission line.

SUMMARY OF THE INVENTION

The present invention has been developed in view of the above drawbacks and its object is to provide a method and an apparatus for transmitting data and a method and an apparatus for receiving data where the transmission of data is carried out with its actual S/N ratio optimized on the transmission lines using two or more modulation schemes while maintaining the average power to be required for data transmission within a predetermined range and can thus be improved in the data transmission rate.

For achievement of the above object of the present invention, a method of transmitting data according to the present invention is provided, as a first feature, for dividing data to be transmitted into one or more bits of data segments, subjecting each of the data segments to digital modulation using two or more modulation schemes which are different in the number of multilevel modulation values and prepared in advance, and transmitting the data segments through one transmission line or a plurality of sub-transmission lines. In particular, the method includes a usage ratio setting step of determining a usage ratio of the modulation scheme assigned to each of the data segments so that an average transmitted power, which is required for transmitting the data and defined by transmitted power, is not higher than a predetermined level, the transmitted power being modified for each of the two or more modulation schemes to be greater as the number of multilevel modulation values increases, and an average bit rate for each data segment is not lower than that when one of the modulation schemes is commonly assigned to all the data segments under a condition that the predetermined level of the average transmitted power remains unchanged and the maximum error rate remains unchanged; a modulation scheme assigning step of selecting and assigning one of the two or more modulation schemes to each of the data segments in order to divide the data into each of the data segments in accordance with the usage ratio determined at the usage ratio setting step; and a modulating step of subjecting the data segments to digital modulation using the modulation schemes assigned to the data segments respectively at the modulation scheme assigning step.

The method of transmitting data of the first feature may be modified as a second feature such that the modulating step includes setting an average level of each transmitted output of the data segments modulated by the two or more modulation schemes to a constant reference level, and an output modifying step of modifying each transmitted power of the data segments, which have been subjected to digital modulation with the constant reference level, to be specific to each of the modulation schemes through multiplying the transmitted output by an increase/decrease coefficient of an actual number or a complex number, and the usage ratio setting step includes determining the increase/decrease coefficient as well as the usage ratio so that the average transmitted power is not higher than a predetermined level and the average bit rate for each data segment is not lower than that when one of the modulation schemes is commonly assigned to all the data segments under a condition that the predetermined level of the average transmitted power remains unchanged and the maximum error rate remains unchanged.

With the modulation schemes which are different in the number of multilevel modulation values and of which the signal outputs remain unchanged, the data transmission rate in relation to the quality characteristic (the S/N ratio) of the transmission line becomes higher as the number of multilevel modulation values is increased. Simultaneously, as the susceptibility to noises becomes high, the error rate will be increased, hence reducing the quality of service QoS. For improving the resistance to noises but not increasing the error rate, the signal output may be increased. This, however, increases the average transmitted power required for transmission of the data and will be unfavorable when the average transmitted power is controlled to stay lower than its maximum. The number of multilevel modulation values represents the amount of information (the number of states) included in a fundamental unit which represents one state of data in the modulated signal waveform. The fundamental unit is typically referred to as a symbol.

The method of transmitting data according to the first or second feature employs two or more of the modulation schemes which are different in the number of multilevel modulation values and prepared in advance and is arranged such that the transmitted output of each of the modulation schemes is set to a higher level as the number of multilevel modulation values increases and the usage ratios of the two or more modulation schemes are determined so that the average transmitted power is not higher than the predetermined level and the average bit rate is not lower than that when one of the modulation schemes is commonly assigned to all the data segments under a condition that the predetermined level of the average transmitted power remains unchanged and the maximum error rate remains unchanged. Since one of the two or more modulation schemes is selected and assigned to each data segment in accordance with the usage ratio, the average bit rate can be improved as compared with the assignment of one modulation scheme uniformly to each data segment, provided that the average transmitted power and the maximum error rate remain unchanged.

In particular, the method of transmitting data according to the second feature allows the transmitted power specific to the modulation scheme to be optimized to match the quality characteristic (the S/N ratio) of the transmission line to be used, whereby the error rate can be reduced or the average bit rate can be improved.

The method of transmitting data according to the first or second feature may further be modified as a third feature such that a plurality of possible combinations of the usage ratios are previously calculated and stored in a table and the usage ratio setting step includes determining the usage ratios by selecting the most suitable combination from the possible combinations of the usage ratios stored in the table so that the average transmitted power is not higher than a predetermined level and the average bit rate is not lower than that when one of the modulation schemes is commonly assigned to all the data segments under a condition that the predetermined level of the average transmitted power remains unchanged and the maximum error rate remains unchanged.

According to the method of transmitting data of the third feature, the combinations of the usage ratios are predetermined and saved in the table and thus allow the assignment of the modulation schemes to each data segment to be conducted according to the selected usage ratio with much ease. The usage ratio is expressed by a rational number which can be denoted by a fraction.

The method of transmitting data according to any of the above-described features may further be modified as a fourth feature in which the number of the modulation schemes prepared in advance is two.

According to the method of transmitting data of the fourth feature, the two modulation schemes are selected so that one of the S/N ratios required for the two modulation schemes is higher and the other is lower than the quality characteristic (the S/N ratio) of the transmission line to be used. This allows one of the two modulation schemes which is required low in the S/N ratio, that is, smaller in the number of multilevel modulation values to be low in the transmitted power and the other modulation scheme which is required high in the S/N ratio, that is, greater in the number of multilevel modulation values to be high in the transmitted power, thus ensuring the advantageous effect of the method of transmitting data of each of the first to third features. Also, since the number of the modulation schemes to be used is only two, the modification of the transmitted power in each scheme can be minimized (an increase in the transmitted power for one and a decrease for the other), hence increasing the efficiency of its action. Moreover, the two modulation schemes to be used permit the relevant modulation circuits to be simplified.

The method of transmitting data according to any of the above-described features may further be modified as a fifth feature in that the modulating step includes subjecting each of the data segments to digital modulation with the modulation scheme assigned to the data segment for each of time slots, the time slots being aligned continuously in a time sequence. Preferably in the modulation scheme assigning step, the modulation schemes are assigned to the data segments respectively so that a time sequence pattern of the modulation scheme assigned to a series of the data segments, which are subjected to digital modulation at each time slot in the modulating step and input to one of the sub-transmission lines, is a periodic pattern in which the time sequence pattern is repeated for a predetermined number of the time slots or a pseudo random pattern.

According to the method of transmitting data of the fifth feature, the advantageous effect of each of the first to fourth features can be ensured when the data segment is subjected to digital modulation at each time slot with the two or more modulation schemes and continuously transmitted in a time sequence to the single transmission line or one of the sub-transmission lines.

The method of transmitting data according to any of the first to fourth features may further be modified as a sixth feature in that the modulating step includes subjecting each of the data segments to digital modulation in parallel for each of time slots which are aligned continuously in a time sequence with the modulation scheme assigned to the data segment according to the usage ratio in the modulation scheme assigning step. The method further comprises a mapping step of distributing and connecting the data segments subjected to digital modulation in the modulating step to the sub-transmission lines respectively so that the time sequence pattern of the modulation schemes of the sub-transmission line satisfies the usage ratios. Preferably the mapping step includes distributing and connecting the data segments subjected to digital modulation in the modulating step to the sub-transmission lines so that a time sequence pattern of the modulation schemes assigned to a series of the data segments, which are output and input to one of the sub-transmission lines for each time slot, is a periodic pattern in which the time sequence pattern is repeated for a predetermined number of the time slots or a pseudo random pattern.

According to the method of transmitting data of the sixth feature, the advantageous effect of each of the first to fourth features can be ensured when the data segments are subjected to digital modulation at each time slot with the two or more modulation schemes and continuously transmitted in a time sequence through each of the sub-transmission lines.

The method of transmitting data according to the sixth feature may be modified as a seventh feature which further includes a multiplexing step of assigning a plurality of sub carriers to the data segments output to the sub-transmission lines respectively

According to the method of transmitting data of the seventh feature, the advantageous effect of each of the first to fourth features can be ensured when the data to be transmitted is distributed to the sub-transmission lines, the data segments are subjected to digital modulation at each time slot with the two or more modulation schemes in each sub-transmission line, the transmission signals of the sub-transmission lines are multiplexed by a multi-carrier modulation, and transmitted through one transmission line (in the form of wireless or not).

The method of transmitting data according to the sixth or seventh feature may further be modified as an eighth feature in that the sub-transmission lines are divided into a plurality of sub-transmission line groups, the usage ratio setting step includes allocating the data to the sub-transmission line groups and determining the usage ratio of each of the modulation schemes with respect to each part of the data allocated to the sub-transmission line groups, the modulation scheme assigning step includes selecting and assigning one of the two or more modulation schemes to each of the data segments according to the usage ratio determined in the usage ratio setting step, independently in each of the sub-transmission line groups, and the mapping step includes distributing and connecting the data segments subjected to digital modulation in the modulating step to the sub-transmission lines of the sub-transmission line group, independently in each of the sub-transmission line groups. Preferably, the usage ratio of each of the modulation schemes determined for each sub-transmission line group is expressed by a fraction, the greatest common divisor of numerators of the usage ratios of the sub-transmission group is one, and the denominator of the usage ratios is a sum of numerators of the usage ratios and the number of the sub-transmission lines of the sub-transmission group is equal to the denominator of the usage ratios.

According to the method of transmitting data of the eighth feature, when the data to be submitted is divided to a lot of sub-transmission lines in parallel, the method of transmitting data according to the six or seventh feature can be applied independently to each sub-transmission line group, thus simplifying the action in each sub-transmission line group, executing the same action throughout the sub-transmission line groups, and making the overall transmission system simple in the construction.

The method of transmitting data according to any of the fifth to eighth features may be modified as a ninth feature which further includes a transmission quality monitoring step of monitoring the characteristic of transmission quality of the transmission line or the sub-transmission lines, and changing the time sequence pattern by modifying the usage ratios in response to a change in the characteristic monitored in the transmission quality monitoring step.

According to the method of transmitting data of the ninth feature, when the characteristic of transmission quality of the transmission line or the sub-transmission lines is varied with time, the time sequence pattern is optimized by modifying the usage ratios in response to its change. Therefore, provided that the average transmitted power and the maximum error rate remain unchanged, the average bit rate can be improved more than that case in the assignment of a single modulation scheme to the data segments, so that the advantageous effect of the method of transmitting data according to the present invention is ensured.

For achievement of the object of the present invention, a method of receiving data is characterized as a first feature including a demodulation scheme assigning step of selecting a demodulation scheme corresponding to the modulation scheme assigned in the modulation scheme assigning step of the method of transmitting data of any of the above-described features from the two or more demodulation schemes which are different in the number of multilevel demodulation values and prepared in advance, and assigning the selected demodulation scheme to each of the data segments which have been transmitted through one transmission line or sub-transmission lines by the method of transmitting data, and a demodulating step of subjecting each of the data segments to digital demodulation with the selected demodulation scheme and synthesizing the demodulated data segments to an original form of the data to be transmitted.

The method of receiving data according to the first feature may be modified as a second feature in which the method of transmitting data is of the second feature and which further includes an input modifying step of modifying each of the data segments according to the increase/decrease coefficient determined in the usage ratio setting step before the data segments are subjected to digital demodulated in the demodulating step.

The method of receiving data according to the first feature may be modified as a third feature in which the method of transmitting data is of any of the sixth to eighth features and which further includes a de-mapping step of distributing and connecting each of the data segments, which have been distributed to the sub-transmission lines in the mapping step of the method of transmitting data, to a demodulation circuit for subjecting each of the data segments to digital demodulation with a demodulation scheme corresponding to the modulation scheme used for digital modulation in the modulating step.

The method of receiving data of the third feature may be modified in which the method of transmitting data is of the seventh feature and which further includes an inverse multiplexing step of distributing a signal multiplexed in the multiplexing step of the method of transmitting data to the sub-transmission lines.

According to the method of receiving data of any of the first to fourth features, the data which has been subjected to digital modulation and transmitted by the method of transmitting data is received and demodulated to recover an original form of the data.

For achievement of the object of the present invention, an apparatus for transmitting data is provided as a first feature for dividing data to be transmitted into one or more bits of data segments, subjecting each of the data segments to digital modulation with two or more modulation schemes which are different in the number of multilevel modulation values and prepared in advance, and transmitting the data segments through one transmission line or sub-transmission lines. In particular, the apparatus includes at least a modulation scheme controlling means for selecting and assigning one of the two or more modulation schemes to each of the data segments and a modulation circuit means for subjecting each of the data segments to digital modulation with the selected modulation scheme, in which the modulation scheme controlling means determines a usage ratio of the modulation scheme assigned to each of the data segments so that an average transmitted power, which is required for transmitting the data and defined by transmitted power, is not higher than a predetermined level, the transmitted power is modified for each of the modulation schemes to be greater as the number of multilevel modulation values increases, and an average bit rate for each data segment is not lower than that when one of the modulation schemes is commonly assigned to all the data segments under a condition that the predetermined level of the average transmitted power remains unchanged and the maximum error rate remains unchanged, and selects and assigns one of the two or more modulation schemes to each of the data segments in order to divide the data into each of the data segments in accordance with the determined usage ratio.

The apparatus for transmitting data of the first feature may be modified as a second feature in which an average level of transmitted outputs of the data segments modulated with the two or more modulation schemes in the modulating step are set to a constant reference level, the modulation circuit means is adapted to modify transmitted power specific to each of the modulation schemes through multiplying the constant reference level of the transmitted output by an increase/decrease coefficient of an actual number or a complex number and the modulation scheme controlling means determines the usage ratio and the increase/decrease coefficient so that the average transmitted power is not higher than a predetermined level and the average bit rate is not lower than that when one of the modulation schemes is commonly assigned to all the data segments under a condition that the predetermined level of the average transmitted power remains unchanged and the maximum error rate remains unchanged, and selects and assigns one of the two or more modulation schemes to each of the data segments in accordance with the usage ratio and controls the modulation circuit means to modify an output of each of the data segments in accordance with the increase/decrease coefficient.

The apparatus for transmitting data according to the first or second feature may further be modified as a third feature in that a plurality of possible combinations of the usage ratios are previously calculated and stored in a table, and the modulation scheme controlling means determines the usage ratios by selecting the most suitable combination from the possible combinations stored in the table so that the average transmitted power is not higher than a predetermined level and the average bit rate is not lower than that when one of the modulation schemes is commonly assigned to all the data segments under a condition that the predetermined level of the average transmitted power remains unchanged and the maximum error rate remains unchanged.

The apparatus for transmitting data according to any of the prescribed features may further be modified as a fourth feature in which the number of the modulation schemes prepared in advance is two.

The apparatus for transmitting data according to any of the above-described features may further be modified as a fifth feature in that the modulation scheme controlling means sequentially inputs the data segment to the modulation circuit means corresponding to the assigned modulation scheme for each of time slots aligned in a time sequence. Preferably, the modulation scheme controlling means assigns the modulation schemes to the data segments respectively so that a time sequence pattern of the modulation schemes assigned to a series of the data segments, which are sequentially output from the modulation circuit means for each time slot and input to the transmission line or one of the sub-transmission lines, is a periodic pattern in which the time sequence pattern is repeated for a predetermined number of the time slots or a pseudo random pattern.

The apparatus for transmitting data according to any of the first to fourth features may further be modified as a sixth feature in that the modulation circuit means includes a plurality of modulation circuits for subjecting each of the data segments to digital modulation in parallel for each of time slots which are aligned continuously in a time sequence with the modulation scheme assigned according to the usage ratio by the modulation scheme controlling means, and which further includes a mapping circuit for distributing and connecting the data segments subjected to digital modulation by the modulation circuit means to the sub-transmission lines respectively so that a time sequence pattern of the modulation schemes of the sub-transmission line satisfies the usage ratios. Preferably the mapping circuit distributes and connects the data segments subjected to digital modulation in the modulation circuit means to the sub-transmission lines so that a time sequence pattern of the modulation schemes assigned to a series of the data segments, which are sequentially output from the mapping circuit for each time slot and input to one of the sub-transmission lines, is a periodic pattern in which the time sequence pattern is repeated for a predetermined number of the time slots or a pseudo random pattern.

The apparatus for transmitting data according to the sixth feature may be modified as a seventh feature which further includes a multiplexing circuit for assigning the sub-carriers to the data segments output to the sub-transmission lines respectively.

The apparatus for transmitting data according to the sixth or seventh feature may further be modified as an eighth feature in that the sub-transmission lines are divided into a plurality of sub-transmission line groups, the modulation scheme controlling means allocates the data to be transmitted to the sub-transmission line groups and determines the usage ratio of each of the modulation schemes with respect to each part of the data allocated to the sub-transmission line groups, and selects and assigns one of the two or more modulation schemes to each of the data segments, and the mapping circuit distributes and connects the data segments subjected to digital modulation in the modulation circuit means to the sub-transmission lines of the sub-transmission line group, independently in each of the sub-transmission line groups. Preferably, each of the usage ratios of the modulation schemes, which is set independently in each of the sub-transmission line groups, is expressed by a fraction, the greatest common divisor of numerators of the usage ratios of the sub-transmission group is one, and a denominator of the usage ratios is a sum of numerators of the usage ratios, and the number of the sub-transmission lines of the sub-transmission line group is equal to the denominator of the usage ratios.

The apparatus for transmitting data according to any of the above-described features allows the data to be transmitted by its corresponding method of transmitting data, thus ensuring the advantageous effect of the method of transmitting data according to the present invention.

For achievement of the object of the present invention, an apparatus for receiving data is characterized as a first feature including at least a demodulation scheme controlling means for selecting a demodulation scheme corresponding to the modulation scheme assigned by the modulation scheme controlling means of the apparatus for transmitting data of any of the above described features from the two or more demodulation schemes which are different in the number of multilevel demodulation values and prepared in advance, and assigning the selected demodulation scheme to each of the data segments which have been transmitted through one transmission line or sub-transmission lines from the apparatus for transmitting data and a demodulation circuit means for subjecting each of the data segments to digital demodulation with the selected demodulation scheme and synthesizing the data segments to an original form of the data to be transmitted.

The apparatus for receiving data according to the first feature may be modified as a second feature in which the apparatus for transmitting data is of the second feature and the demodulation scheme controlling means controls the demodulation circuit means to modify an input of each of the data segments before digital modulation according to the increase/decrease coefficient determined in the modulation scheme controlling means in the apparatus for transmitting data.

The apparatus for receiving data according to the first feature may be modified as a third feature in which the apparatus for transmitting data is of any of the sixth to eighth features and which further includes a de-mapping circuit for distributing and connecting the data segments, which have been distributed to the sub-transmission lines by the mapping circuit in the apparatus for transmitting data, to the demodulation circuits of the demodulating circuit means respectively for subjecting the data segments to digital modulation with the demodulation scheme corresponding to the modulation scheme used for digital modulation in the modulation circuit means.

The apparatus for receiving data according to the third feature may be modified in which the apparatus for transmitting data is of the seventh feature and which further includes an inverse multiplexing circuit for distributing the data segments multiplexed by the multiplexing circuit in the apparatus for transmitting data to the sub-transmission lines.

According to the apparatus for receiving data of any of the first to fourth features, the data which has been subjected to digital modulation and transmitted by each apparatus for transmitting data according to the above described features is received and demodulated to recover an original form of the data.

BRIEF DESCRIPTION OF THE DRAWINGS

Fig. 1 illustrates the relationship between an S/N ratio threshold per modulation scheme and an effective S/N ratio of a sub-transmission line;
Fig. 2 illustrates a loading table showing the relationship between the S/N ratio threshold per modulation scheme and the number of bits per symbol;
Fig. 3 illustrates the concept of a method of transmitting data according to the present invention where two modulation schemes which are different in the number of multilevel modulation values are selectively assigned to each time slot through power control;
Fig. 4 is a schematic block diagram of a common functional block arrangement of a data transmitter and a data receiver according to a first embodiment of the present invention;
Fig. 5 illustrates an expanded loading table showing the relationship between an average number of bits per symbol, an S/N ratio threshold, usage ratios of the two modulation schemes, and an increase/decrease coefficient in a composite modulation scheme which is a combination of the two modulation schemes which are different in the number of multilevel modulation values;
Fig. 6 is a schematic block diagram of a common function block arrangement of a data transmitter and a data receiver according to a second embodiment of the present invention;
Fig. 7 is a block diagram of a circuitry arrangement of a group of sub transmission lines between the data transmitter and the data receiver shown in Fig. 6;
Fig. 8 illustrates a mapping table of the mapping circuit shown in Fig. 7 for periodically mapping data to five sub-transmission lines;
Fig. 9 illustrates a mapping table of the mapping circuit shown in Fig. 7 for pseudo random mapping data to the five sub transmission lines;
Fig. 10 is a schematic block diagram of a common function block arrangement of a data transmitter and a data receiver according to a third embodiment of the present invention; and
Fig. 11 is a schematic block diagram showing a modification of the common function block arrangement of the data transmitter and the data receiver according to the present invention.

DETAILED DESCRIPTION OF THE INVENTION

Embodiments of the present invention will be described in the form of a method and an apparatus for transmitting data and a method and an apparatus for receiving data, referring to the drawings. For ease of the description, the method of transmitting data and the method of receiving data according to the present invention are referred to as inventive methods hereinafter while the apparatus for transmitting data and the apparatus for receiving data according to the present invention are referred to as inventive apparatuses hereinafter.

The inventive methods and apparatuses are based on a technology for improving the transmission of data, which has been divided into data segments of one, two, or more bits and subjected to digital modulation at each data segment using two or more modulation schemes which are different in the number of multilevel modulation values as prepared in advance before transmitted through one transmission channel or a plurality of sub-transmission channels under a limitation where the average transmitted power required for the transmission of data remains not higher than a particular level and the average bit rate for each data segment remains not higher than a particular rate.

(Background)

Before starting the description of the inventive methods and apparatuses, the number of multilevel modulation values, the S/N ratio threshold of the modulating action, and the effective S/N ratio of the transmission line which are applied to the inventive methods and apparatuses according to the present invention will first be described. Also, the drawbacks in the counter measures in which a lot of modulation schemes are employed to minimize a difference in the S/N ratio threshold as described in the paragraphs of the related art will be reviewed in more detail.

In a typical communications system, the transmission of data may be interrupted by unwanted artifacts on the transmission line including signal decays, distortions, and noises superimposed. Accordingly, the received signal may be characterized by its S/N ratio after subjected to an initial processing such as equalizing. The error rate derived from the demodulation of the received signal depends substantially on the selected modulation scheme, the S/N ratio due to the characteristic of the transmission line such as average transmitted power and unwanted artifacts on the transmission line. This allows the communications system to employ a variety of modulation schemes. The S/N ratio of the transmission line measured at the receiver side is then examined for selectively determining one of the applicable modulation schemes which can satisfy the required error rate assigned to the communication system. In a common manner, one scheme which can provide the maximum data transmission rate is selected from the applicable modulation schemes capable of achieving a desired level of the quality of service QoS, hence optimizing the resource to be accessed by a user.

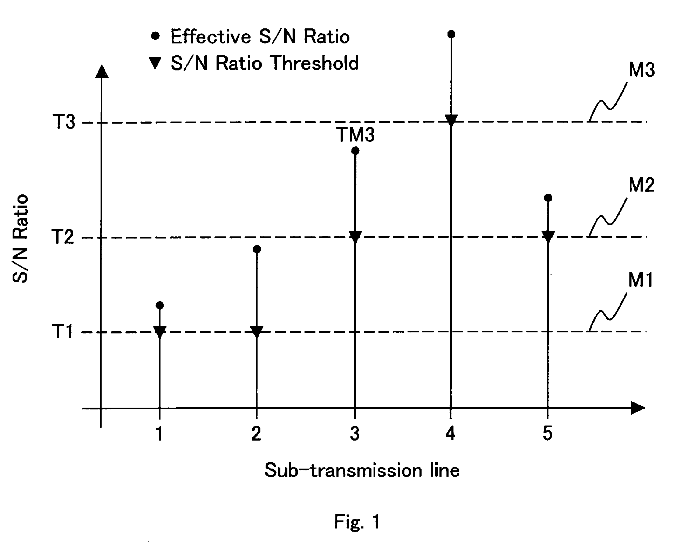

The above described sequence is illustrated in Fig. 1. In Fig. 1, the S/N ratio thresholds T1 to T3 represent the lower limits of the S/N ratio to be measured at the receiver side as assigned to the modulation schemes M1 to M3 to be used, respectively. The modulation schemes M1, M2, and M3 are higher in the number of multilevel modulation values (or the number of bits per symbol) in this order and can thus highly be susceptible to the noise in this order when their signal outputs are equal. Correspondingly, the S/N ratio thresholds T1, T2, and T3 are greater in this order. The black dots at the upper end of five sub-transmission lines S1 to S5 represent actual measurements of the S/N ratio or effective S/N ratios obtained at the receiver side. For example, as the effective S/N ratio TM3 is greater than the two S/N ratio thresholds T1 and T2 of the modulation schemes M1 and M2, the sub-transmission line S3 can satisfy the quality of service QoS. Then, as the modulation scheme M2 is greater in the size of data to be conveyed than the modulation scheme M1, it can thus be selected.

Typically, the modulation schemes to be selected by the transmitter side are varied in the constellation pattern (allocation of signal points). For example, quadrature amplitude modulation (QAM) may be classified into 4-QAM, 16-QAM, 64-QAM, and so on, which are different in the constellation pattern depending on the number of multilevel modulation values. Also, the modulation schemes to be selected by the transmitter side include all the steps of converting an initial data to be transmitted into a signal form to be transmitted through the transmission line or the sub-transmission line and, if desired, may be accompanied with various forward error correction (FEC) techniques. According to the present invention, the modulation schemes of one specific type which are different in the number of multilevel modulation values are varied in the transmission characteristic and are thus discriminated from one another. More specifically, while 4-QAM, 16-QAM, and 64-QAM and the like are identical in the modulation type, they are treated as different modulation schemes.

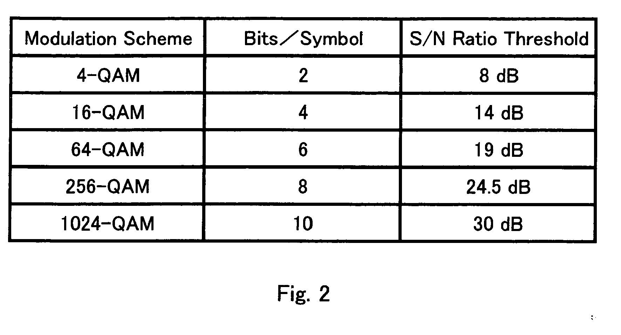

The number of the modulation schemes which are also different in the number of multilevel modulation values and can thus be subjected to the selecting action at the transmitter side is finite and each of the modulation schemes is required to be assigned with a unique S/N threshold for satisfying the quality of service QoS. This allows the relationship to be established in the form of a loading table between the effective S/N ratio of the transmission line or the sub-transmission line and the modulation scheme applicable with the S/N ratio. In other words, as the amount of data of a symbol (a fundamental unit of the modulation signal waveform) to be conveyed (commonly expressed by the number of bits per symbol) is strictly defined in each modulation scheme, the S/N ratio threshold depends on the size of data to be transmitted through the transmission line or the sub-transmission line. Fig. 2 illustrates an example of the loading table. In the loading table of Fig. 2, the modulation schemes are different in the QAM pattern (the number of multilevel modulation values) and assigned with corresponding S/N ratio thresholds (of approximate value) for ensuring a desired level of the quality of service QoS.

It is essential to examine a difference in the S/N ratio threshold between any two modulation schemes of the applicable modulation schemes at the transmitter side, which are adjacent in the number of multilevel modulation values (for example, a difference $\Delta T_{12}$ between T1 and T2 or a difference $\Delta T_{23}$ between T2 and T3 shown in Fig. 1). For ensuring the transmission of data of high quality, the S/N ratio threshold in the modulation scheme selectively determined has to be lower than the effective S/N ratio pertinent to the transmission line. In common, the effective S/N ratio is not applied in the maximum manner. For example, the effective S/N ratio TM3 of the sub-transmission line S3 is higher than the S/N ratio threshold T2 in the modulation scheme M2 selectively determined as shown in Fig. 1. As a result, the difference $\Delta T_{M32}$ between the actual S/N ratio measurement TM3 and the S/N ratio threshold T2 will not effectively be used. Accordingly, an ideal modulation scheme is higher in the number of multilevel modulation values than the modulation scheme M2 and has the S/N ratio threshold lower than the effective S/N ratio, but the modulation scheme which is actually used is lower in the data transmission capability and thus lower in the data transmission efficiency than the ideal modulation scheme. Assuming that the effective S/N ratio of the transmission line is equal to 18 dB and the 16-QAM modulation scheme, of which the S/N ratio threshold is 14 dB, is selected from the loading table shown in Fig. 2, a difference of 4 dB between 18 dB and 14 dB will be abundant and not contribute to the improvement of the data transmission efficiency.

When the modulation scheme (32-QAM) for satisfying the same quality of service QoS as 16-QAM and transmitting five bits per symbol, of which the S/N threshold is 17 dB, is applicable instead of 16-QAM shown in the loading table, its data transmission rate increases from four bits to five bits per symbol and can thus be improved by 25 percents. However, every conventional communication system can hardly employ a lot of variations of the modulation schemes due to practical issues such as higher complexity of the transmitter and the receiver.

(Technical Advantages of the Invention)

In order to expanding the loading table without adding other intermediate multilevel modulation values, the inventive method and apparatus selects one modulation scheme from the applicable modulation schemes, which are different in the number of multilevel modulation values, at each time slot and selectively determines the modulation schemes in a time sequence to actually establish a series of intermediate level modulation values. Also, the transmitted power for each of the selected modulation schemes is modified up and down in order to hold the total average transmitted power throughout the data output for each time slot at a uniform level. It should be noted that for discriminating the modulation scheme actually provided with a set of intermediate modulation levels from a group of the modulation schemes assigned in advance to the inventive apparatus (pertinent to the inventive method and apparatus), the former is referred to as a composite modulation scheme when necessary.

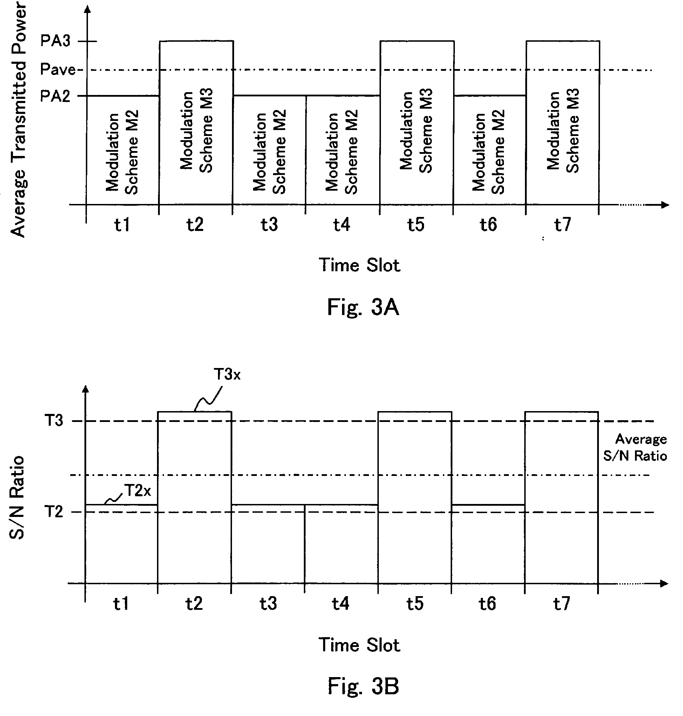

The method according to the present invention for selectively determining one of two modulation schemes, which are different in the number of multilevel modulation values, at each time slot through modifying the power output will be described, for example, referring to Fig. 3. As shown in Fig. 3A, the modulation signal of a modulation scheme M2 is transmitted at an average transmitted power PA2 for one group of the continuous time slots (t1, t3, t4, t6...) while the modulation signal of another modulation scheme M3 is transmitted at an average transmitted power PA3 for the other group of the time slots (t2, t5, t7...). It is essential to preset the usage ratios of the two modulation schemes M2 and M3 so that the total average transmitted output level Pave throughout the time slots remains uniformly at a reference level or at least not exceeding the reference level. Meanwhile, the S/N ratio of the transmission line measured at the receiver side depends largely on the transmitted power at each time slot. As shown in Fig. 3B, the transmitted power is controlled to stay not higher than the average transmitted power Pave for the first group of the time slots (t1, t3, t4, t6...). This allows the S/N ratio T2x of the transmission line to be decreased from the initial effective S/N ratio to a level slightly higher than the S/N ratio threshold T2 in the modulation scheme M2. Also, the transmitted power is controlled to stay higher than the average transmitted power Pave for the second group of the time slots (t2, t5, t7...). This allows the S/N ratio T3x of the transmission line to be increased from the effective S/N ratio to a level slightly higher than the S/N ratio threshold T3 in the modulation scheme M3.

For achievement of the data transmission at a desired level of the quality of service QoS, it is requested that the transmitted power at the time slots in each of the modulation schemes is carefully controlled so that the S/N ratio of the transmission line measured at the receiver side stays equal to the respective S/N ratio threshold while the usage ratios of the two modulation schemes M2 and M3 are carefully predetermined so that the total average transmitted power Pave throughout the time slots after the power control remains uniformly at a reference level or not exceeding the reference level. In other words, the usage ratios assigned to the two modulation schemes for the time slots are carefully determined so that, while the average transmitted power Pave remains not higher than the reference level, the average bit rate (the transmission rate) for each time slot is not lower than its counter part when one single modulation scheme is assigned to all the time slots under a condition that the reference level of the average transmitted power remains unchanged and the maximum error rate remains unchanged, or more particularly, under a condition that both the average transmitted power and the required quality of service QoS remain unchanged.

(First Embodiment)

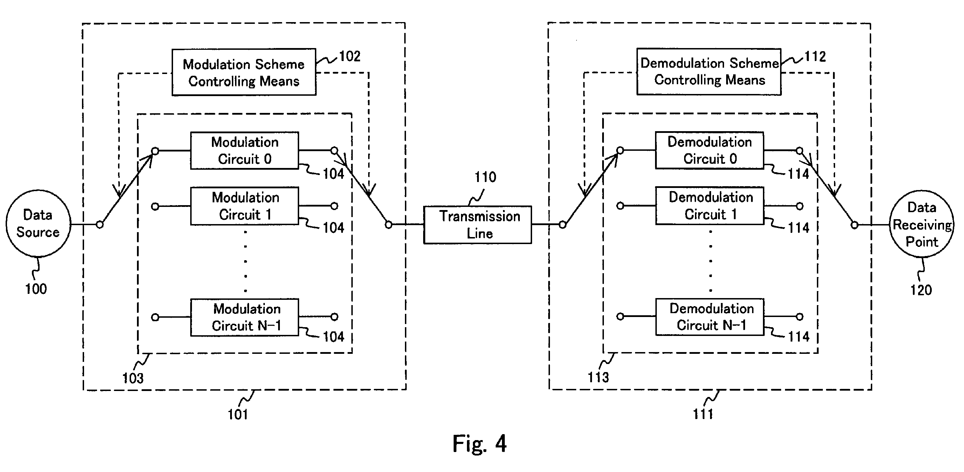

Next, one embodiment of the inventive method or apparatus will be described in a simplified form. Fig. 4 is a schematic functional block diagram of the inventive apparatus according to the present embodiment. As shown in Fig. 4, the inventive apparatus includes a transmitter 101 connected between a data source 100 and a transmission line 110 and a receiver 111 connected between the transmission line 110 and a data receiving point 120. The transmitter 101 includes a modulation scheme controlling means 102 and a modulation circuit means 103 having a row of modulation circuits 104, each corresponding to two or more modulation schemes which are different in the number of multilevel modulation values and prepared in advance. The receiver 111 includes a demodulation scheme controlling means 112 and a demodulation circuit means 113 having a row of demodulation circuits 114, each corresponding to their respective modulation circuits 104.

In the transmitter 101, the modulation scheme controlling means 102 calculates the usage ratios of the modulation schemes, selectively determines the modulation scheme which corresponds to one of the modulation circuits 104 at each time slot based on the calculated usage ratio, receives from the data source 100 a data segment of a bit length according to the number of transmit bits per symbol which is determined by the number of multilevel modulation values of the selected modulation scheme, and supplies the data segment to the corresponding modulation circuit 104. The data segment is subjected to digitally modulation with the selected modulation scheme at each time slot by the corresponding modulation circuit 104, modified to a signal level which is determined through multiplying by an increase/decrease coefficient, which will be described later, so that the effective S/N ratio of the transmission line is equal to the S/N ratio threshold, and then sequentially transferred to the transmission line 110.

In the receiver 111, the demodulation scheme controlling means 112 receives the data segment (a symbol) subjected to digital modulation at each time slot from the transmission line 110, selects one of the demodulation circuits 114 corresponding to the modulation schemes assigned to the time slots, and supplies the data segment to the selected demodulation circuit 114 in synchronization with a time sequence pattern of assignment of the modulation schemes to the time slots. The data segment subjected to digital modulation is then modified through multiplying by an inverse of the increase/decrease coefficient, which will be described later, demodulated at the time slot with the selected demodulation scheme by the corresponding demodulation circuit 114, and transferred to the data receiving point 120.

It is important that, with respect to the same data segment, both the modulation scheme and the demodulation scheme are selected in a pair by synchronization between the action of selecting the modulation circuit 104 in the modulation scheme controlling means 102 and the action of selecting the demodulation circuit 114 in the demodulation scheme controlling means 112. For example, when the data segment at a time slot has been modulated by a 4-QAM modulating action of the modulation circuit 104 in the transmitter 101, the demodulation scheme controlling means 112 performs the synchronizing control action so that the data segment is demodulated by a 4-QAM demodulating action of the corresponding demodulation circuit 114 in the demodulation circuit means 113 in the receiver 111.

The action of modifying the modulated signal waveform released from the modulation circuit 104 will be described. It is assumed that the modulation scheme is selected from a group of applicable modulation schemes which are different in the number of multilevel modulation values and have been assigned to the inventive apparatus, the output level of a modulated signal waveform produced by the selected modulation scheme remains at a predetermined transmission signal level in the initial stage, and the applicable modulation schemes of the group are equal in the average transmitted power level. The output level of the modulated signal waveform produced by the selected modulation scheme is controllably modified through multiplying by its unique increase/decrease coefficient. It is now essential for satisfying a desired level of the quality of service QoS determined depending on the transmission condition (such as the S/N ratio) of the transmission line and maintaining the total average transmitted power for the entire transmit data at not higher than a reference level to carefully determine the usage ratio of the selected modulation scheme to the time slots in relation to the increase/decrease coefficient. When the increase/decrease coefficient is given in response to the output level (for example, a voltage amplitude) of the modulated signal waveform, the transmitted power is varied by a square of the increase/decrease coefficient.

A technique of expanding the loading table which is required in the inventive method will be described. The loading table is so expanded that the composite modulation scheme defined by a novel assignment pattern of applicable modulation schemes which are different in the number of multilevel modulation values is established and the S/N ratio thresholds required in the composite modulation scheme satisfy a desired level of the quality of service QoS. While the modulation scheme controlling means 102 and the demodulation scheme controlling means 112 have a function of acknowledging the assignment with time of the modulation schemes to the time slots, the assignment pattern may be determined considering the ease of executing the function in view of the practical reason. In this embodiment, the usage ratio of each applicable modulation scheme is expressed by a simple fraction thus contributing to the simplification of the function in the modulation scheme controlling means 102 and the demodulation scheme controlling means 112.

An N number of the modulation schemes which are different in the number of multilevel modulation values are assigned at the usage ratio Rn to the time slots in the above described assignment pattern, where n is an index (integer) discriminating one modulation scheme from another and ranges from 0 to (N-1). The usage ratio Rn is a usage ratio of one modulation scheme n to the series of time slots. The ratio Rn is expressed by Equation 1 shown below. For example, when the two modulation schemes are equally assigned to the time slots, their usage ratios R0 and R1 are both denoted by 1/2.

$$\sum_{n=0}^{N-1} Rn = 1$$

Also, the modulation scheme defined by n assigned to one time slot is accompanied with an increase/decrease coefficient Pn expressed by an actual number or a complex number. Assuming that the average output level of each modulation scheme is at the same constant reference level in the initial stage before the modification process, the increase/decrease coefficient Pn in the inventive method has to satisfy the relationship of Equation 2 as used for modifying the output level so that the total average transmitted power throughout the transmit data remains not increased from its level prior to the modification process.

$$\sum_{n=0}^{N-1} Rn \, |\, Pn\,|^2 \le 1$$

It should, however, be noted that the relationship shown in Equation 2 permits no change in the transmission gain after the modification process. The relationship shown in Equation 2 represents a typical example and may be changed to match any particular requirement by those skilled in the art.

It is then necessary for satisfying a desired level of the quality of service QoS to determine the S/N ratio threshold in the new composite modulation scheme defined by a favorable assignment pattern (for example, a time-sequence pattern) with the usage ratio Rn and the increase/decrease coefficient Pn expressed by Equations 1 and 2, of the applicable modulation schemes. In this embodiment, the S/N ratio threshold in the composite modulation scheme is set equal to the effective S/N ratio of the transmission line for satisfying the desired level of the quality of service QoS at the receiver 111 side while each modulation scheme is independent from the other modulation scheme in the assignment pattern. The increase/decrease coefficient Pn in each modulation scheme is so determined that the actual measurement of the S/N ratio at the receiver 111 side, which derives from a signal modulated by the each modulation scheme and modified with the increase/decrease coefficient Pn, is equal to the S/N ratio threshold of each modulation scheme.

For ease of describing the technique of expanding the loading table, it is now assumed that the two modulation schemes which are different in the number of multilevel modulation values are employed.

The two modulation schemes are provided with their respective S/N ratio thresholds assigned adjacent to each other in the loading table (composed of the applicable modulation schemes in the communication system) at the initial stage (before the expansion process).

It is also assumed that the usage ratios R0 and R1 of the two modulation schemes are expressed by simple fractions as described previously.

The S/N ratio threshold Tc of the composite modulation scheme is set equal to a minimum level for satisfying the desired level of the quality of service QoS while the usage ratios R0, R1 and the increase/decrease coefficients P0, P1 of the two modulation schemes are predetermined. As a result, the loading table is expanded to a loading table including the composite modulation scheme. As understood, the increase/decrease coefficients P0, P1 are determined so that the actual measurement of the S/N ratio at the receiver 111 side, which derives from a signal modulated by each modulation scheme and modified with the increase/decrease coefficient, is not lower than the S/N ratio threshold for satisfying the desired level of the quality of service QoS.

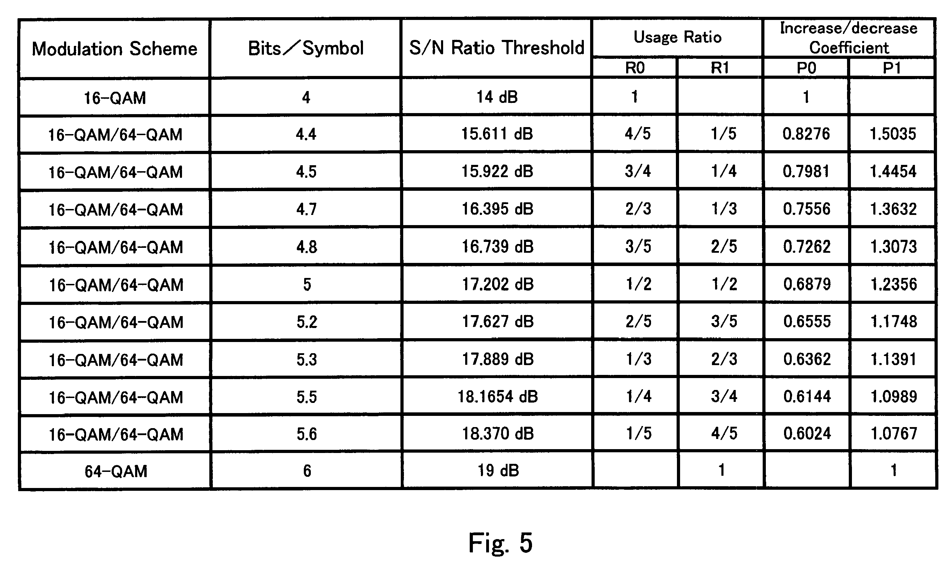

Fig. 5 illustrates an example of the expanded loading table. The two modulation schemes applied to the loading table shown in Fig. 5 are of 16-QAM and 64-QAM types shown in the initial loading table of Fig. 2 where their usage ratios R0 and R1 are expressed by simple fractions of which the denominator ranges from 2 to 5. As apparent from Fig. 5, the expanded loading table includes nine modes of the composite modulation scheme interpolating between the two, 16-QAM and 64-QAM, modulation schemes. Each of the nine modes of the composite modulation scheme satisfies the desired level of the quality of service QoS with no increase in the average transmitted power.

For example, when both the usage ratios R0 and R1 are 1/2 in the composite modulation scheme (#5) shown in Fig. 5, 16-QAM, of which the number of bits per symbol to be transmitted is four, and 64-QAM, of which the number of bits per symbol to be transmitted is six, are assigned at 1/2 each. Therefore, the average of bits to be transmitted is five bits per symbol. The S/N ratio required at the receiver 111 side (the S/N ratio threshold) is 17.2 dB which is intermediate between 14 dB for 16-QAM and 19 dB for 64-QAM.

The example shown in Fig. 5 is specified in that the S/N ratio TPn measured at the receiver 111 side on a signal modified with the increase/decrease coefficient Pn (n = 0, 1) is calculated from the following Equation 3. Equation 3 is based on frequency domain equalization (FDE) using a minimum mean square error (MMSE).

$$TPn = \frac{TOn^2}{1 + \dfrac{(TOn - 1)}{|\,Pn\,|^2}}$$

where TOn is the S/N ratio prior to the modification of the output, or when Pn = 1 and equivalent to the S/N ratio threshold of the composite modulation scheme. Also, the S/N ratios TPn and TOn in Equation 3 are denoted not in decibels but in the form of a ratio between noise power and signal power. The decibel notation may be given by multiplying the common logarithm of the result of Equation 3 by ten. Accordingly, the S/N ratio threshold in each mode of the composite modulation scheme can be obtained from TOn in Equation 3.

When the usage ratios R0 and R1 in the composite modulation scheme (#4) in the expanded loading table of Fig. 5 is 3/5 and 2/5, thus satisfying Equation 1, its corresponding increase/decrease coefficients P0, P1 satisfy Equation 2 (where the inequality is replaced by an equality). Using TP0 = 25.1189 (= 14 dB) and P0 = 0.7262 in Equation 3, TO0 is calculated to be 47.1954 (= 16.739 dB). Similarly, using TP1 = 79.4328 (= 19 dB) and P1 = 1.3073 in Equation 3, TO1 is 47.1954 (= 16.739 dB). As a result, the S/N ratio threshold is given as 16.739 dB.

The relationship between the increase/decrease coefficient Pn and the S/N ratios TPn, TOn is not limited to Equation 3 but may be modified by those skilled in the art depending on the characteristics of the transmission line and the receiver. For instance, MMSE-FDE may be replaced by zero forcing (ZF) equalization with the relationship in Equation 3 modified correspondingly. Although the increase/decrease coefficient Pn shown in the loading table of Fig. 5 is an actual number, it may be a complex number.

As the S/N ratio threshold in each of the nine modes of the composite modulation scheme shown in the expanded loading table of Fig. 5 has been determined to establish the effective S/N ratio of the transmission line or sub-transmission line, one favorable composite modulation scheme is selected from the nine modes of which the S/N ratio threshold is not higher than but closer to the effective S/N ratio. More particularly, the best combination of the two modulation schemes 16-QAM and 64-QAM corresponding to the composite modulation scheme is selected, thus allowing the data to be transmitted at higher efficiency with no increase of the average transmitted power but satisfying the desired level of the quality of service QoS. When the effective S/N ratio of the transmission line is, for example, 18 dB, a mode (#7) of the composite modulation scheme is selectively used where the usage ratios R0 and R1 are 1/3 and 2/3. Accordingly, the average bit rate is 5.3 bits per symbol which is higher by 32.5 % than 4 bits per symbol for 16-QAM shown in the loading table of Fig. 2 prior to the expansion process.

As described above, the inventive method in this embodiment involves constructing the composite modulation scheme from a finite number of the applicable modulation schemes, selecting the favorable modulation scheme through examining the usage ratio in the composite modulation scheme, and modifying the output level of a signal with the corresponding increase/decrease coefficient, whereby the data can be transmitted at higher efficiency with no increase of the average transmitted power but satisfying the desired level of the quality of service QoS. The inventive method is applicable to not only such a communication system with a single transmission line as shown in Fig. 4 but also a multi-carrier system or another communication system having two or more sub-transmission lines. In such communication systems, the inventive method and apparatus shown in Fig. 4 may be applied independently to each of the sub-carriers or the sub-transmission lines equally successfully.

(Second Embodiment)

Another embodiment according to the present invention will be described where the inventive method and apparatus of the first embodiment are applied to a multi-carrier system or any other communication system having two or more sub-transmission lines. The second embodiment is contemplated for lessening the complexity of the system arrangement even when the inventive method and apparatus are assigned to each sub-carrier or sub-transmission line independently.

Some drawbacks produced when the inventive method and apparatus are assigned to each sub-carrier or sub-transmission line independently will first be described.

When the inventive method and apparatus according to the first embodiment are applied for transmitting data through a number of sub-transmission lines, the modulation scheme controlling means and the demodulation scheme controlling means have to be provided equal in the number to the sub-transmission lines at each of the transmitter and the receiver. It is also essential to acknowledge the assignment with time of the applicable modulation schemes to the time slots in each sub-transmission line with synchronization between the modulation scheme controlling means and the demodulation scheme controlling means. As the number of the sub-transmission lines is increased, the action of acknowledging the assignment becomes more difficult and intricate. In a case where the multi-carrier system is operated with orthogonal frequency division multiplexing (OFDM), it will be advantageous to control the total number of bits to be transmitted at each time slot through the sub-transmission lines to a uniform number. However, as the inventive method and apparatus according to the first embodiment are assigned to each sub-carrier or sub-transmission line independently, the total number of bits to be transmitted at each time slot will be varied.

For compensating the above drawback, in the second embodiment, the sub-transmission lines are separated into one or more groups, and the same assignment pattern (the time sequence pattern) of the modulation schemes is assigned to each group of the sub-transmission lines. At each time slot, a group of the data strings modulated by a plurality of the modulation schemes which are different in the number of multilevel modulation values for are transmitted over the sub-transmission lines belonging to their respective groups of the sub transmission lines. The total number of bits per symbol of the data string along the group of the sub-transmission lines remains uniform at each time slot. More particularly, while the number of bits per symbol for each time slot through one of the sub-transmission lines is varied in a time sequence with the assignment of the modulation schemes shifted from one to another, the total number of bits per symbol for each time slot through the group of the sub-transmission lines remain uniform under a controlling action. In brief, the amount of data to be transmitted at each time slot through one group of the sub transmission lines remains uniform. It is further interpreted that the total amount of data to be transmitted at each time slot through all the sub-transmission lines is controlled to remain uniform.

Since the sub-transmission lines are separated into groups in the second embodiment, the number of the modulation scheme controlling means as well as the number of the demodulation scheme controlling means can significantly be reduced. In other words, the sub-transmission lines of the group can share the modulation scheme controlling means and the demodulation scheme controlling means.

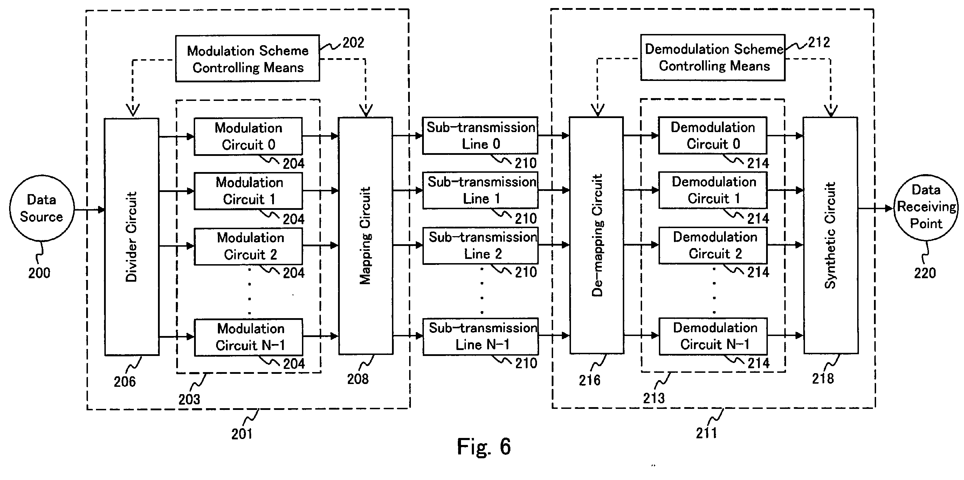

Fig. 6 is a functional block diagram schematically showing the inventive apparatus according to the second embodiment. As shown in Fig. 6, the inventive apparatus includes a transmitter 201 connected between a data source 200 and a plurality of sub-transmission lines 210 and a receiver 211 connected between the sub-transmission lines 210 and a data receiving point 220.

The transmitter 201 includes a modulation scheme controlling means 202, a modulation circuit means 203 having a row of modulation circuits 204, each corresponding to two or more modulation schemes which are different in the number of multilevel modulation values and prepared in advance, a divider circuit 206 for dividing and distributing in parallel the data received from the data source 200 to the modulation circuits 204, and a mapping circuit 208 for receiving the modulated signals from the modulation circuits 204, and modifying and distributing them to the sub-transmission lines 210 at each time slot. The receiver 211 includes a demodulation scheme controlling means 212, a demodulation circuit means 213 having a plurality of demodulation circuits 214 corresponding to the modulation circuits 204, a de-mapping circuit 216 for responsively transferring the modulated signals received from the mapping circuit 208 to a plurality of demodulation circuits 214 where the modulated signals are subjected to digital demodulation by the demodulation schemes corresponding to the modulation schemes, and a synthetic circuit 218 for synthesizing the demodulated data segments received from the demodulation circuits 214 to reproduce an original form of the data. Although not shown in Fig. 6, a pair of the modulation scheme controlling means 202 and the demodulation scheme controlling means 212 is provided for each group of the sub-transmission lines 210 (not shown).

Assuming that a pair of the modulation scheme controlling means 202 and the demodulation scheme controlling means 212 provided for each group of the sub-transmission lines 210 constitutes a controlling means assigned to each group of the sub transmission lines, the arrangement shown in Fig. 6 may act as a functional block for each group of the sub-transmission lines. The inventive apparatus may hence be implemented by providing one or more of the function blocks in parallel.

The action of controlling the divider circuit 206 and the mapping circuit 208 in the modulation scheme controlling means 202 will now be described. It is assumed that the sub-transmission lines in each group are identical in the effective S/N ratio and the usage ratio Rn and the increase/decrease coefficient Pn in the assignment pattern of the modulation schemes, which are different in the number of multilevel modulation values, with no increase of the average transmitted power and satisfying the desired level of the quality of service QoS along each of the sub-transmission lines are calculated in the same manner as of the inventive method in the first embodiment. It is also assumed for the description below that each group of the sub-transmission lines includes five sub transmission lines and the two, 16-QAM and 64-QAM, modulation schemes which are different in the number of multilevel modulation values are assigned with usage ratios R0 and R1 expressed by 2/5 and 3/5. The increase/decrease coefficients P0, P1 are equal to those shown in the expanded loading table of Fig. 5 when the conditions for the average transmitted power and the quality of service QoS remain unchanged. The usage ratios R0 and R1 are expressed by fractions and selectively determined so that the denominators of the fractions are equal to the number of the sub-transmission lines of the group.

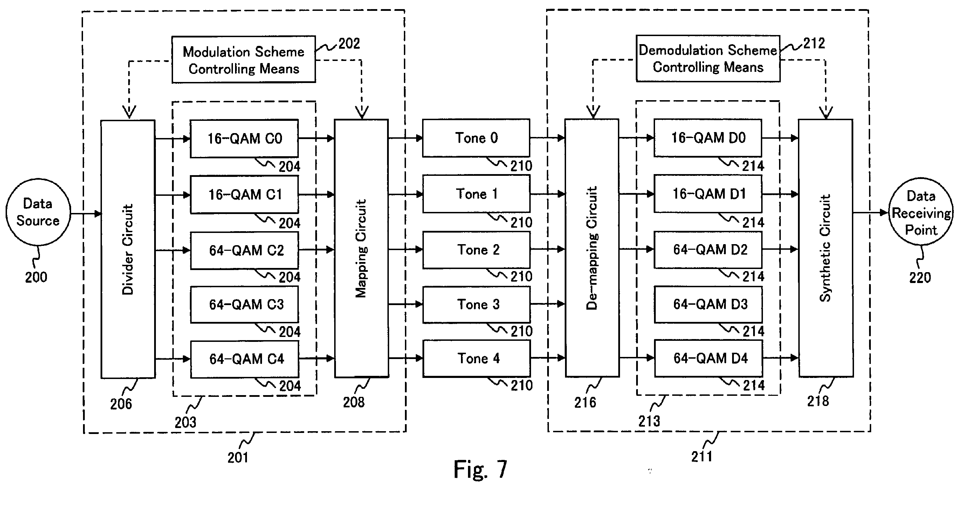

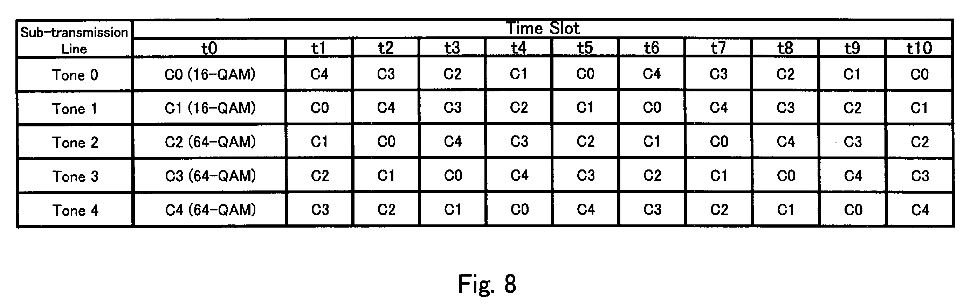

In this embodiment, the five sub-transmission lines 210 (Tone0 to Zbne4) of each group are connected to five of the modulation circuits 204 (C0 to C4) as shown in Fig. 7. Referring to the usage ratios R0 and R1, the five modulation circuits 204 includes two 16-QAM circuits and three 64-QAM circuits. The 16-QAM modulation circuit modulates four bits per symbol for each time slot while the 64-QAM modulation circuit modulates six bits per symbol at each time slot. Accordingly, the total of twenty-six bits for each time slot of the data are modulated and mapped to the five sub-transmission lines. Fig. 8 illustrates a mapping table for the divider circuit 206 distributing twenty-six bits of the data to the modulation circuits at each time slot and the mapping circuit 208 mapping the data to the five sub-transmission lines.

As apparent from Fig. 8, the divider circuit 206 divides twenty-six bits of the data into two 4-bit components and three 6-bit components at each time slot and distributes the two 4-bit components to the 16-QAM modulation circuits C0, C1 respectively and the three 6-bit components to the 64-QAM modulation circuits C2, C3, C4 respectively. This distribution remains unchanged throughout the time slots t0 to t10. The modulation circuits C0, C 1 subject the 4-bit components to digital 16-QAM modulation and modify them with the increase/decrease coefficient P0. The modulation circuits C2, C3, C4 subject the 6-bit components to digital 64-QAM modulation and modify them with the increase/decrease coefficient P1. Tone0 to Tone4 shown in Fig. 8 represent the five sub-transmission lines.

The mapping circuit 208 receives the modulated signals modified with the increase/decrease coefficients P0, P1 from the five modulation circuits C0 to C4 and maps the signals to the sub-transmission lines Tone0 to Thne4 in the order of the modulation circuits C4, C3, C2, C1, and C0 repeatedly. The mapping pattern is shifted from the modulation circuit C0 to the modulation circuits C4, C3, C2, and C1 through the time slots t0 to t4 along the sub-transmission line Tone0. The mapping pattern is shifted from the modulation circuit C 1 to the modulation circuits C0, C4, C3, and C2 through the time slots t0 to t4 along the sub-transmission line Tone1. The mapping pattern is shifted from the modulation circuit C2 to the modulation circuits C1, C0, C4, and C3 through the time slots t0 to t4 along the sub-transmission line Tone2. The mapping pattern is shifted from the modulation circuit C3 to the modulation circuits C2, C1, C0, and C4 through the time slots t0 to t4 along the sub-transmission line Tone3. The mapping pattern is shifted from the modulation circuit C4 to the modulation circuits C3, C2, C1, and C0 through the time slots t0 to t4 along the sub-transmission line Tone4. The mapping patterns for the five modulation circuits C0 to C4 are periodically repeated every five time slots. Also, the patterns are periodically repeated along the five sub-transmission lines Tone0 to Tone4 every five time slots so that the 16-QAM and 64-QAM are used with the usage ratios R0 and R1 of 2/5 and 3/5.

Since mapping for each of the sub-transmission lines Tone0 to Tone4 in a group of the sub-transmission lines in the same pattern is shifted for each time slot, the mapping action can be carried out under a simple rule. This allows the divider circuit 206 and the mapping circuit 208 in the modulation scheme controlling means 202 to be controlled with much ease. These distributing and mapping actions can be conducted at each group of the sub transmission lines.

The modulated signals distributed using the above mapping pattern by the mapping circuit 208 are transmitted through the corresponding sub-transmission lines 210, received by the de-mapping circuit 216 and conveyed to the corresponding demodulation circuits 214 (D0 to D4) using an inverse of the mapping pattern. For example, as the data segments (the modulated signals) at the time slot t0 shown in Fig. 8 have been transmitted from the sub-transmission lines Tone0 to Tone4 to the de-mapping circuit 216, the data segment from the sub-transmission line Tone0 is received by the demodulation circuit D0 corresponding to the (16-QAM) modulation circuit C0, the data segment from the sub-transmission line Tone1 is received by the demodulation circuit D 1 corresponding to the (16-QAM) modulation circuit C1, the data segment from the sub-transmission line Tone2 is received by the demodulation circuit D2 corresponding to the (64-QAM) modulation circuit C2, the data segment from the sub-transmission line Tone3 is received by the demodulation circuit D3 corresponding to the (64-QAM) modulation circuit C3, and the data segment from the sub-transmission line Tone4 is received by the demodulation circuit D4 corresponding to the (64-QAM) modulation circuit C4. Similarly, as the data segments (the modulated signals) at the time slot t1 have been transmitted from the sub-transmission lines Tone0 to Tone4 to the de-mapping circuit 216, they are distributed to the corresponding demodulation circuits D0 to D4 which are counterparts of the modulation circuits C0 to C4 at the time slot t1 in the table shown in Fig. 8. This de-mapping action is uninterruptedly repeated for the rest of data segments at each time slot after t2. The demodulation circuit 214 multiplies the received modulated signals by inverses of the increase/decrease coefficients P0, P1 for reverse modifications before the demodulation process. The modulated signals are demodulated to five data segments consisting of two 4-bit components and three 6-bit components (the total of twenty six bits). The five demodulated data segments are then combined to a 26-bit data segment by the synthetic circuit 218 and then transferred to the data receiving point 220. Those de-mapping and synthesizing actions are equally conducted in each group of the sub-transmission lines.

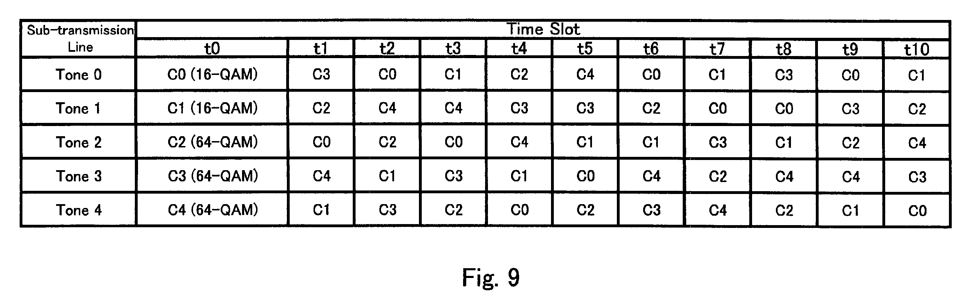

The mapping pattern used in the mapping circuit 208 and the de-mapping circuit 216 is not limited to such a periodically repeating pattern as shown in Fig. 8. The mapping pattern may be implemented by a pseudo random number pattern shown in Fig. 9 or any other specific pattern carefully designed in view of the practical aspects. When the pseudo random number pattern shown in Fig. 9 is used, a usage ratio of each modulation scheme in each of the sub-transmission lines satisfies the predetermined usage ratio in view of sufficient numbers of the time slots.

As the first embodiment permits the modulation schemes to be assigned in a time sequence according to the usage ratios predetermined for the single transmission line or sub-transmission line, a pair of the modulation circuit and the demodulation circuit is provided for each of the two modulation schemes. However, the second embodiment features pairs of the modulation circuit 204 and the demodulation circuit 214 provided equal in the number to the sub-transmission lines, even when two modulation schemes are used in each group of the sub-transmission lines. Also, since the number of the sub-transmission lines in each group is set equal to the denominator of a fraction by which the usage ratio is expressed, the groups of the sub-transmission lines can be realized with the usage ratios to be set without an intricate arrangement.

It should be specifically noted that the usage ratios (fractions) can be set so that the size of the sub-transmission line groups (the number of the sub-transmission lines) falls within a desired range. While each of the sub-transmission lines in one group employs the same time sequence pattern, the time sequence pattern should be shared by a proper number of the sub-transmission line in the practice. When groups of the sub transmission lines are provided and it is necessary to minimize the size of the groups of the sub-transmission lines, the average bit rate in some groups of the sub-transmission lines may be intentionally limited. Even in such a case, the second embodiment allows the time sequence pattern to be modified for establishing a lower level of the S/N ratio threshold with not degrading the transmission quality but satisfying the desired degree of the quality of service QoS. For example, when the two, 16-QAM and 64-QAM, modulation schemes which are different in the number of multilevel modulation values are used with the usage ratios R0 and R1 of 1/5 and 4/5, the size of the groups of the sub-transmission lines is expressed by five. Even if the size is preferably four for any reason, the usage ratios R0 and R1 can simply be set to 1/4 and 3/4, respectively. Referring to the expanded loading table shown in Fig. 5, the S/N ratio threshold is then declined from 18.37 dB to 18.1654 dB, thus decreasing the average bit rate from 5.6 bits per symbol to 5.5 bits per symbol. It is highly advantageous to selectively minimize the average bit rate in the groups of the sub-transmission lines. If the minimization of the average bit rate is not permitted, the mapping action with the large size of the sub-transmission line group will be difficult or impossible, hence causing the sub-transmission lines to be not grouped but use the time sequence pattern of the first embodiment separately

(Third Embodiment)

A further embodiment of the present invention will be described where the inventive method and apparatus of the second embodiment are applied to a multi-carrier system. According to the inventive method and apparatus of the second embodiment, the multi-carrier system is arranged in which the modulated signals distributed to the corresponding sub-transmission lines by the mapping action are multiplexed by multi-carrier modulation and transmitted through one transmission line to the receiver where the multiplexed signal is separated by an inverse of the multiplexing action into a group of signal components which are then distributed to the sub transmission lines and supplied to the modulation circuits by the de-mapping action before demodulated and transferred to the data receiving point.

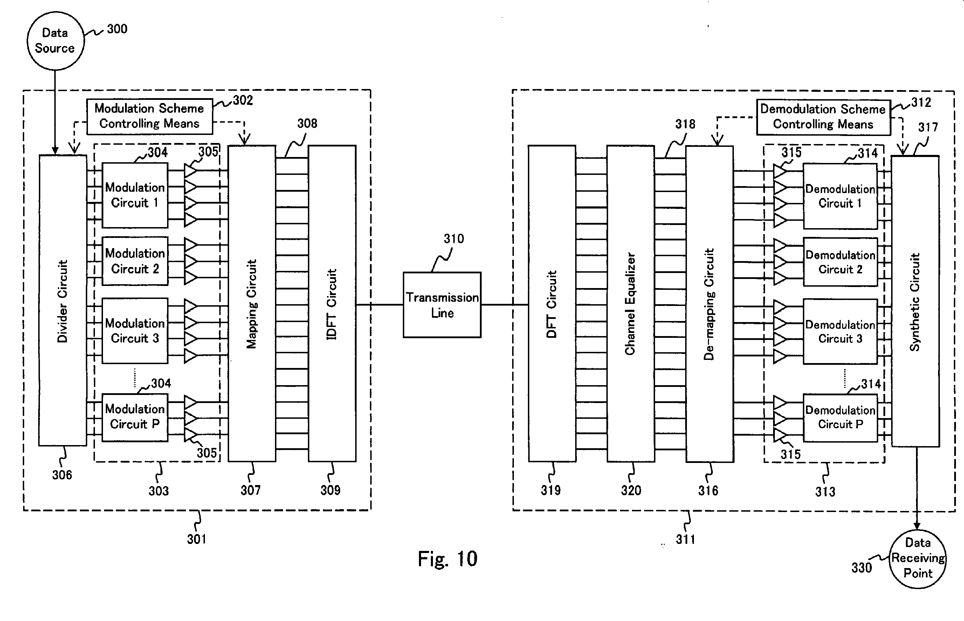

Fig. 10 is a functional block diagram schematically showing the inventive apparatus according to the third embodiment. As shown in Fig. 10, the inventive apparatus includes a transmitter 301 connected between a data source 300 and a transmission line 310 and a receiver 311 connected between the transmission line 310 and a data receiving point 330.

The transmitter 301 includes a modulation scheme controlling means 302, a modulation circuit means 303 having mainly a row of modulation circuits 304, each corresponding to two or more modulation schemes which are different in the number of multilevel modulation values and prepared in advance, and a row of gain controllers 305 for receiving the modulated signals which are output at a constant reference level from the modulation circuits 304 and modifying them with the use of an increase/decrease coefficient, a divider circuit 306 for dividing the data received from the data source 300 before distributing to the modulation circuits 304 in parallel, a mapping circuit 307 for modifying at each time slot the modulated signals received via the gain controllers 305 from the modulation circuits 304 and distributing them through a series of sub-transmission lines 308, and an IDFT circuit 309 for subjecting the modulated signals received from the sub-transmission lines 308 to an action of inverse discrete Fourier transformation (IDFT) for multi-carrier modulation with orthogonal frequency division multiplexing (OFDM). For ease of the description, not shown in Fig. 10 are other relevant circuit means conducting parallel/series conversion after the inverse discrete Fourier transformation and additional operations such as cyclic prefix (guard interval) concatenation, insertion of pilot symbols, filtering, and windowing and the like which are apparent to those skilled in the art.

The receiver 311 includes a demodulation scheme controlling means 312, a DFT circuit 319 for subjecting the multi-carrier modulated signal received from the transmission line 310 to an action of discrete Fourier transformation (DFT) for OFDM mode multi-carrier demodulation before distributing to a series of sub-transmission lines 318, a channel equalizer 320, a demodulation circuit means 313 having mainly a row of demodulation circuits 314 corresponding to the modulation circuits 304 and a row of inverse gain controllers 315 for multiplying the signal components, which are input to the demodulation circuits 314, by an inverse of the increase/decrease coefficient, a de-mapping circuit 316 for separately connecting the modulated signal components distributed by the mapping circuit 307 via inverse gain controllers 315 to the corresponding demodulation circuits 314 for digital demodulation by the corresponding demodulation schemes, and a synthetic circuit 317 for synthesizing the demodulated data segments produced by the demodulation circuits 314 to an original form of the data. For ease of the description, not shown in Fig. 10 are relevant circuit means for conducting, for example, front-end process, sampling process, and series/parallel conversion prior to the discrete Fourier transformation.

The channel equalizer 320 is implemented by a circuit means for conducting an MMSE equalizing action or a zero-forcing equalization action to correct any distortion on the transmission line. When the transmission line is low in the S/N ratio, the MMSE equalizing action is preferably employed. Similar to a common system, the simplified system of this embodiment disallows the channel equalizer 320 to modify the transmission line characteristics after the equalizing action.

Although not shown, the sub-transmission lines 308 are divided into groups similar to those of the second embodiment, hence allowing the mapping circuit 307 to subject each group of the sub-transmission lines to the mapping action. Also, the sub-transmission lines 318 in the receiver are divided into groups, hence allowing the de-mapping circuit 316 to subject each group of the sub-transmission lines to the de-mapping action. The actions of the modulation scheme controlling means 302, the divider circuit 306, the mapping circuit 307, the demodulation scheme controlling means 312, the de-mapping circuit 316, and the synthetic circuit 317 are equal to those in the second embodiment and will not be described in more detail.

In the second embodiment, the modulation circuits 204 have an output modifying function while the demodulation circuits 214 have an input modifying function. Alternatively, both the output modifying function and the input modifying function may be isolated from the modulation circuits 204 and the demodulation circuits 214. In the third embodiment, the gain controllers 305 are connected between the corresponding modulation circuits 304 and the mapping circuit 307 while the inverse gain controllers 315 are connected between the de-mapping circuit 316 and the corresponding demodulation circuits 314, thus permitting the isolation of both the output and input modifying functions.

Simply for ease of the description, each of the modulation circuits 304 corresponding to two or more modulation schemes which are different in the number of multilevel modulation values, shown in Fig. 10, is equipped with a set of data input ports and a set of data output ports. Strings of data received by the data input ports of the modulation circuit 304 are separately subjected to the digital modulation before released. Similarly, each of the demodulation circuits 314 is equipped with a set of data input ports and a set of data output ports. Strings of the modulated data are subjected to digital demodulation separately by the demodulation circuit 314 before released.

Although the multi-carrier system according to the third embodiment is embodied with the inventive method and apparatus of the second embodiment, the multi-carrier modulation schemes are not limited to the OFDM modulation.

Some modifications of the inventive method and apparatus will be described next.

(1) In each of the embodiments described above, the inventive method involves calculating the usage ratio and the increase/decrease coefficient set in response to the effective S/N ratio of the transmission lines so that the average bit rate is higher than its level when a single modulation scheme is assigned to all the time slots under a condition that both the average transmitted power and the quality of service QoS required remain unchanged, and modifying the assignment of the modulation schemes (equivalent to the mapping action in the second and third embodiments) and the output of the signal using the usage ratio and the increase/decrease coefficient. However, the effective S/N ratio of the transmission line may be changed with time because a source of noise or interference is newly generated, vanished or decreased. When the effective S/N ratio is changed with time, the usage ratio and the increase/decrease coefficient can be modified in a real time in response to the change, hence permitting the data to be transmitted by the inventive method at a higher bit rate and efficiency

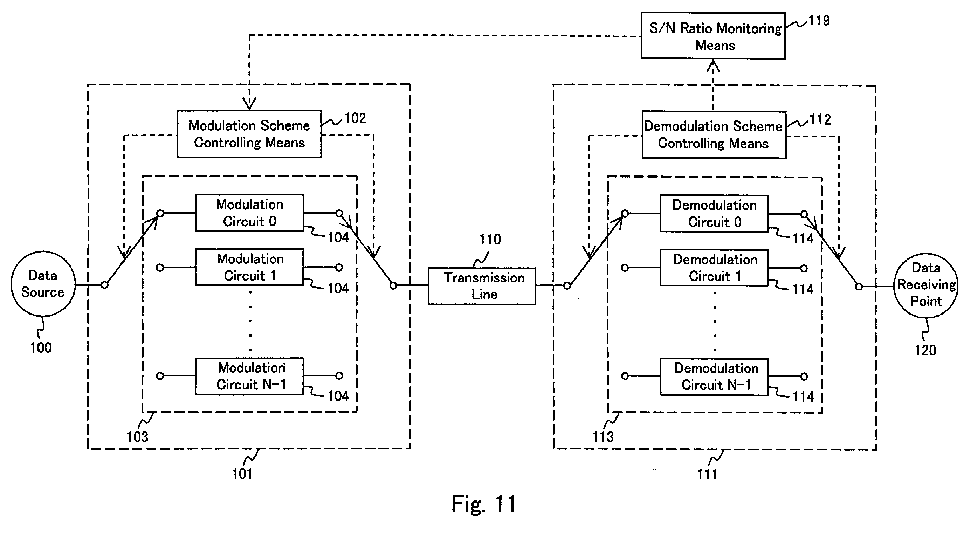

This will be described in more detail, referring to the first embodiment. As shown in Fig. 11, an S/N ratio monitoring means 119 for always or periodically measuring the effect S/N ratio of the transmission line 110 is provided in the receiver 111. The modulation scheme controlling means 102 always or periodically examines whether the effective S/N ratio measured by the S/N ratio monitoring means 119 is changed or not. Upon determining that the effective S/N ratio is changed, the modulation scheme controlling means 102 examines whether the S/N threshold in the composite modulation scheme determined by the assignment pattern (in a time sequence) of the currently assigned modulation scheme is not higher than the effective S/N ratio after the detection of change. When the S/N ratio threshold exceeds the effective S/N ratio after the detection of change, another variation of the composite modulation scheme of which the S/N ratio threshold is maximum but not exceeding the effective S/N ratio after the detection of change is selected from, for example, the expanded loading table shown in Fig. 5 to replace the currently assigned modulation scheme. Even when the S/N ratio threshold in the currently assigned variation of the composite modulation scheme remains not higher than the effective S/N ratio after the detection of change, the composite modulation scheme is shifted from the currently assigned variation to another, provided that any other variation of the composite modulation scheme exists of which the S/N ratio threshold is greatest while not exceeding the effective S/N ratio after the detection of change. Using the usage ratio and the increase/decrease coefficient after the composite modulation scheme is shifted, the assignment pattern for the modulation schemes is modified. Timed with the assignment pattern after the modification, the demodulation scheme controlling means 112 selects and supplies at each time slot one of the demodulation circuits 114 with the data component sequentially.

In the second or third embodiment employing the sub-transmission lines, the mapping pattern used by the mapping circuits 208, 307 for mapping is modified in the same manner as of the assignment pattern of the modulation scheme instead of modifying the time sequence pattern for the single transmission line. If desired, the mapping pattern may be modified after the size of the group of the sub-transmission lines has been altered.

(2) In each of the above-described embodiments, examples of the function block arrangement of the inventive apparatus are illustrated in Figs. 4, 6, and 10. The inventive apparatus is not limited to those examples of the functional block arrangement. Also, the functional block arrangement may be implemented by any applicable design such as hardware, software, or firmware arrangement.

(3) In each of the above-described embodiments, the modulation schemes which are applicable to the inventive apparatus and different in the number of multilevel modulation values are described with, but not limited to, known QAM schemes including 16-QAM and 64-QAM. Also, the number of multilevel modulation values of the two different modulation schemes used for the expansion of the loading table is not limited to 16 and 64.

As set forth above, the present invention is favorably applicable to a method and an apparatus for transmitting and receiving data capable of improving the data transmission rate with a finite number of applicable modulation schemes while the average power for data transmission is limited to a level and the communication quality is determined by an error rate and more particularly to a data communication method and apparatus operable with a multi-carrier modulation and demodulation technique.

**Claims**

1.  A method of transmitting data for dividing data to be transmitted into one or more bits of data segments, subjecting each of the data segments to digital modulation using two or more modulation schemes which are different in a number of multilevel modulation values and prepared in advance, and transmitting the data segments through one transmission line or a plurality of sub-transmission lines, the method comprising:

    a usage ratio setting step of determining a usage ratio of the modulation scheme assigned to each of the data segments so that an average transmitted power, which is required for transmitting the data and defined by transmitted power, is not higher than a predetermined level, the transmitted power being modified for each of the two or more modulation schemes to be greater as the number of multilevel modulation values increases, and an average bit rate for each data segment is not lower than that when one of the modulation schemes is commonly assigned to all the data segments under a condition that the predetermined level of the average transmitted power remains unchanged and the maximum error rate remains unchanged;

a modulation scheme assigning step of selecting and assigning one of the two or more modulation schemes to each of the data segments in order to divide the data into each of the data segments in accordance with the usage ratio determined at the usage ratio setting step; and

a modulating step of subjecting the data segments to digital modulation using the modulation schemes assigned to the data segments respectively at the modulation scheme assigning step.

2.  The method of transmitting data according to claim 1, wherein
    the modulating step includes setting an average level of each transmitted output of the data segments modulated by the two or more modulation schemes to a constant reference level and
    an output modifying step of modifying each transmitted power of the data segments, which have been subjected to digital modulation with the constant reference level, to be specific to each of the modulation schemes through multiplying the transmitted output by an increase/decrease coefficient of an actual number or a complex number, and
    the usage ratio setting step includes determining the increase/decrease coefficient as well as the usage ratio so that the average transmitted power is not higher than a predetermined level and the average bit rate is not lower than that when one of the modulation schemes is commonly assigned to all the data segments under a condition that the predetermined level of the average transmitted power remains unchanged and the maximum error rate remains unchanged.

3.  The method of transmitting data according to claim 1 or 2,
    wherein
    a plurality of possible combinations of the usage ratios are previously calculated and stored in a table, and
    the usage ratio setting step includes determining the usage ratios by selecting the most suitable combination from the possible combinations of the usage ratios stored in the table so that the average transmitted power is not higher than a predetermined level and the average bit rate is not lower than that when one of the modulation schemes is commonly assigned to all the data segments under a condition that the predetermined level of the average transmitted power remains unchanged and the maximum error rate remains unchanged.

4.  The method of transmitting data according to any one of claims 1 to 3, wherein the number of the modulation schemes prepared in advance is two.

5. The method of transmitting data according to any one of claims 1 to 4, wherein the modulating step includes subjecting each of the data segments to digital modulation with the modulation scheme assigned to the data segment for each of time slots, the time slots being aligned continuously in a time sequence.

6. The method of transmitting data according to claim 5, wherein
the modulation scheme assigning step includes assigning the modulation schemes to the data segments respectively so that a time sequence pattern of the modulation schemes assigned to a series of the data segments is a periodic pattern in which the time sequence pattern is repeated for a predetermined number of the time slots or a pseudo random pattern.

7. The method of transmitting data according to any one of claims 1 to 4, wherein
the modulating step includes subjecting each of the data segments to digital modulation in parallel for each of time slots which are aligned continuously in a time sequence with the modulation scheme assigned to the data segment according to the usage ratio in the modulation scheme assigning step, the method further comprising
a mapping step of distributing and connecting the data segments subjected to digital modulation in the modulating step to the sub-transmission lines respectively so that a time sequence pattern of the modulation schemes of the sub-transmission line satisfies the usage ratios.

8. The method of transmitting data according to claim 7, wherein
the mapping step includes distributing and connecting the data segments subjected to digital modulation in the modulating step to the sub-transmission lines so that a time sequence pattern of the modulation schemes assigned to a series of the data segments is a periodic pattern in which the time sequence pattern is repeated for a predetermined number of the time slots or a pseudo random pattern, the data segments being output and input to one of the sub-transmission lines for each time slot.

9. The method of transmitting data according to claim 7 or 8 comprising
a multiplexing step of assigning a plurality of sub carriers to the data segments output to the sub-transmission lines respectively.

10. The method of transmitting data according to any one of claims 7 to 9, wherein
the sub-transmission lines are divided into a plurality of sub-transmission line groups,
the usage ratio setting step includes allocating the data to the sub-transmission line groups and determining the usage ratio of each of the modulation schemes with respect to each part of the data allocated to the sub-transmission line groups,
the modulation scheme assigning step includes selecting and assigning one of the two or more modulation schemes to each of the data segments according to the usage ratio determined in the usage ratio setting step, independently in each of the sub-transmission line groups, and
the mapping step includes distributing and connecting the data segments subjected to digital modulation in the modulating step to the sub-transmission lines of the sub-transmission line group, independently in each of the sub-transmission line groups.

11. The method of transmitting data according to claim 10, wherein
the usage ratio of each of the modulation schemes is expressed by a fraction, the greatest common divisor of numerators of the usage ratios of the sub-transmission group is one, and a denominator of the usage ratios is a sum of numerators of the usage ratios, and
the number of the sub-transmission lines of the sub-transmission line group is equal to the denominator of the usage ratios.

12. The method of transmitting data according to any one of claims 6 to 11 comprising
a transmission quality monitoring step of monitoring a characteristic of transmission quality of the transmission line or the sub-transmission lines, and
changing the time sequence pattern by modifying the usage ratios in response to a change in the characteristic monitored in the transmission quality monitoring step.

13. A method of receiving data comprising:

a demodulation scheme assigning step of selecting a demodulation scheme corresponding to the modulation scheme assigned in the modulation scheme assigning step of the method of transmitting data of any one of claims 1 to 12 from two or more demodulation schemes which are different in the number of multilevel demodulation values and prepared in advance, and assigning the selected demodulation scheme to each of the data segments which have been transmitted through one transmission line or sub-transmission lines by the method of transmitting data; and
a demodulating step of subjecting each of the data segments to digital demodulation with the selected demodulation scheme and synthesizing the data segments to an original form of the data to be transmitted.

14. The method of receiving data according to claim 13, wherein
the method of transmitting data is of claim 2, the method of receiving data further comprising
an input modifying step of modifying each of the data segments according to the increase/decrease coefficient determined in the usage ratio setting step of the method of transmitting data before the data segments are subjected to digital demodulation in the demodulating step.

15. The method of receiving data according to claim 13, wherein
the method of transmitting data is of any one of claims 7 to 11, the method of receiving data further comprising
a de-mapping step of distributing and connecting each of the data segments, which have been distributed to the sub-transmission lines in the mapping step of the method of transmitting data, to a demodulation circuit for subjecting each of the data segments to digital demodulation with a demodulation scheme corresponding to the modulation scheme used for digital modulation in the modulating step.

16. The method of receiving data according to claim 15, wherein
the method of transmitting data is of claim 9, the method of receiving data further comprising
an inverse multiplexing step of distributing a signal multiplexed in the multiplexing step of the method of transmitting data to the sub-transmission lines.

17. An apparatus for transmitting data for dividing data to be transmitted into one or more bits of data segments, subjecting each of the data segments to digital modulation with two or more modulation schemes which are different in the number of multilevel modulation values and prepared in advance, and transmitting the data segments through one transmission line or sub-transmission lines, the apparatus comprising at least:

   a modulation scheme controlling means for selecting and assigning one of the two or more modulation schemes to each of the data segments; and
   a modulation circuit means for subjecting each of the data segments to digital modulation with the selected modulation scheme; wherein
   the modulation scheme controlling means determines a usage ratio of the modulation scheme assigned to each of the data segments so that an average transmitted power, which is required for transmitting the data and defined by transmitted power, is not higher than a predetermined level, the transmitted power being modified for each of the modulation schemes to be greater as the number of multilevel modulation values increases, and an average bit rate for each data segment is not lower than that when one of the modulation schemes is commonly assigned to all the data segments under a condition that the predetermined level of the average transmitted power remains unchanged and the maximum error rate remains unchanged and selects and assigns one of the two or more modulation schemes to each of the data segments in order to divide the data into each of the data segments in accordance with the determined usage ratio.

18. The apparatus for transmitting data according to claim 17, wherein
an average level of transmitted outputs of the data segments modulated with the two or more modulation schemes are set to a constant reference level, the modulation circuit means is adapted to modify transmitted power specific to each of the modulation schemes through multiplying the reference level of the transmitted output by an increase/decrease coefficient of an actual number or a complex number, and
the modulation scheme controlling means determines the usage ratio and the increase/decrease coefficient so that the average transmitted power is not higher than a predetermined level and the average bit rate is not lower than that when one of the modulation schemes is commonly assigned to all the data segments under a condition that the predetermined level of the average transmitted power remains unchanged and the maximum error rate remains unchanged, and selects and assigns one of the two or more modulation schemes to each of the data segments in accordance with the usage ratio and controls the modulation circuit means to modify an output of each of the data segments in accordance with the increase/decrease coefficient.

19. The apparatus for transmitting data according to claim 17 or 18, wherein
a plurality of possible combinations of the usage ratios are previously calculated and stored in a table, and
the modulation scheme controlling means determines the usage ratios by selecting the most suitable combination from the possible combinations of the usage ratios stored in the table so that the average transmitted power is not higher than a predetermined level and the average bit rate is not lower than that when one of the modulation schemes is commonly assigned to all the data segments under a condition that the predetermined level of the average transmitted power remains unchanged and the maximum error rate remains unchanged.

20. The apparatus for transmitting data according to any one of claims 17 to 19, wherein the number of the modulation schemes prepared in advance is two.

21. The apparatus for transmitting data according to any one of claims 17 to 20, wherein the modulation scheme controlling means sequentially inputs the data segment to the modulation circuit means corresponding to the assigned modulation scheme for each of time slots aligned in a time sequence.

22. The apparatus for transmitting data according to claim 21,
wherein
the modulation scheme controlling means assigns the modulation schemes to the data segments respectively so that a time sequence pattern of the modulation schemes assigned to a series of the data segments is a periodic pattern in which the time sequence pattern is repeated for a predetermined number of the time slots or a pseudo random pattern, the data segments being sequentially output from the modulation circuit means for each time slot and input to the transmission line or one of the sub-transmission lines.

23. The apparatus for transmitting data according to any one of claims 17 to 20, wherein
the modulation circuit means includes a plurality of modulation circuits for subjecting each of the data segments to digital modulation in parallel for each of time slots which are aligned continuously in a time sequence with the modulation scheme assigned according to the usage ratio by the modulation scheme controlling means, the apparatus further comprising a mapping circuit for distributing and connecting the data segments subjected to digital modulation by the modulation circuit means to the sub-transmission lines respectively so that a time sequence pattern of the modulation schemes of the sub-transmission line satisfies the usage ratio.

24. The apparatus for transmitting data according to claim 23,
wherein
the mapping circuit distributes and connects the data segments subjected to digital modulation in the modulation circuit means to the sub-transmission lines so that a time sequence pattern of the modulation schemes assigned to a series of the data segments is a periodic pattern in which the time sequence pattern is repeated for a predetermined number of the time slots or a pseudo random pattern, the data segments being sequentially output from the mapping circuit for each time slot and input to one of the sub-transmission lines.

25. The apparatus for transmitting data according to claim 23 or 24 comprising
a multiplexing circuit for assigning the sub-carriers to the data segments output to the sub-transmission lines respectively.

26. The apparatus for transmitting data according to any one of claims 23 to 25, wherein
the sub-transmission lines are divided into a plurality of sub-transmission line groups,
the modulation scheme controlling means allocates the data to be transmitted to the sub-transmission line groups and determines the usage ratio of each of the modulation schemes with respect to each part of the data allocated to the sub-transmission line groups, and selects and assigns one of the two or more modulation schemes to each of the data segments, and
the mapping circuit distributes and connects the data segments subjected to digital modulation in the modulation circuit means to the sub-transmission lines of the sub-transmission line group, independently in each of the sub-transmission line groups.

27. The apparatus for transmitting data according to claim 26,
wherein
each of the usage ratios of the modulation schemes, which is set independently in each of the sub-transmission line groups, is expressed by a fraction, the greatest common divisor of numerators of the usage ratios of the sub-transmission group is one, a denominator of the usage ratios is a sum of numerators of the usage ratios, and the number of the sub-transmission lines of the sub-transmission line group is equal to the denominator of the usage ratios.

28. An apparatus for receiving data comprising at least:

a demodulation scheme controlling means for selecting a demodulation scheme corresponding to the modulation scheme assigned by the modulation scheme controlling means of the apparatus for transmitting data of any one of claims 17 to 27 from the two or more demodulation schemes which are different in the number of multilevel demodulation values and prepared in advance, and assigning the selected demodulation scheme to each of the data segments which have been transmitted through one transmission line or sub-transmission lines from the apparatus for transmitting data; and
a demodulation circuit means for subjecting each of the data segments to digital demodulation with the selected demodulation scheme and synthesizing the data segments to an original form of the data to be transmitted.

29. The apparatus for receiving data according to claim 28, wherein
the apparatus for transmitting data is of claim 18, and the demodulation scheme controlling means controls the demodulation circuit means to modify an input of each of the data segments before digital demodulation according to the increase/decrease coefficient determined by the modulation scheme controlling means in the apparatus for transmitting data.

30. The apparatus for receiving data according to claim 28, wherein
the apparatus for transmitting data is of any one of claims 23 to 27, and the apparatus for receiving data further comprising
a de-mapping circuit for distributing and connecting the data segments, which have been distributed to the sub-transmission lines by the mapping circuit in the apparatus for transmitting data, to demodulation circuits of the demodulating circuit means respectively for subjecting the data segments to digital demodulation with the demodulation scheme corresponding to the modulation scheme used for digital modulation in the modulation circuit means.

31. The apparatus for receiving data according to claim 30, wherein
the apparatus for transmitting data is of claim 25, and the apparatus for receiving data further comprising
an inverse multiplexing circuit for distributing the data segments multiplexed by the multiplexing circuit in the apparatus for transmitting data to the sub-transmission lines.

Fig. 1

| Modulation Scheme | Bits／Symbol | S/N Ratio Threshold |
|---|---|---|
| 4-QAM | 2 | 8 dB |
| 16-QAM | 4 | 14 dB |
| 64-QAM | 6 | 19 dB |
| 256-QAM | 8 | 24.5 dB |
| 1024-QAM | 10 | 30 dB |

Fig. 2

Fig. 3A

Fig. 3B

Fig. 4

| Modulation Scheme | Bits/Symbol | S/N Ratio Threshold | Usage Ratio | | Increase/decrease Coefficient | |
|---|---|---|---|---|---|---|
| | | | R0 | R1 | P0 | P1 |
| 16-QAM | 4 | 14 dB | 1 | | 1 | |
| 16-QAM/64-QAM | 4.4 | 15.611 dB | 4/5 | 1/5 | 0.8276 | 1.5035 |
| 16-QAM/64-QAM | 4.5 | 15.922 dB | 3/4 | 1/4 | 0.7981 | 1.4454 |
| 16-QAM/64-QAM | 4.7 | 16.395 dB | 2/3 | 1/3 | 0.7556 | 1.3632 |
| 16-QAM/64-QAM | 4.8 | 16.739 dB | 3/5 | 2/5 | 0.7262 | 1.3073 |
| 16-QAM/64-QAM | 5 | 17.202 dB | 1/2 | 1/2 | 0.6879 | 1.2356 |
| 16-QAM/64-QAM | 5.2 | 17.627 dB | 2/5 | 3/5 | 0.6555 | 1.1748 |
| 16-QAM/64-QAM | 5.3 | 17.889 dB | 1/3 | 2/3 | 0.6362 | 1.1391 |
| 16-QAM/64-QAM | 5.5 | 18.1654 dB | 1/4 | 3/4 | 0.6144 | 1.0989 |
| 16-QAM/64-QAM | 5.6 | 18.370 dB | 1/5 | 4/5 | 0.6024 | 1.0767 |
| 64-QAM | 6 | 19 dB | | 1 | | 1 |

Fig. 5

EP 1 906 579 A2

Data Receiving Point — 220

Synthetic Circuit — 218

Demodulation Scheme Controlling Means — 212

Demodulation Circuit 0 — 214

Demodulation Circuit 1 — 214

Demodulation Circuit 2 — 214

Demodulation Circuit N−1 — 214

211

213

De-mapping Circuit — 216

Sub-transmission Line 0 — 210

Sub-transmission Line 1 — 210

Sub-transmission Line 2 — 210

Sub-transmission Line N−1 — 210

Mapping Circuit — 208

Modulation Scheme Controlling Means — 202

Modulation Circuit 0 — 204

Modulation Circuit 1 — 204

Modulation Circuit 2 — 204

Modulation Circuit N−1 — 204

201

203

Divider Circuit — 206

Data Source — 200

Fig. 6

Fig. 7

| Sub-transmission Line | Time Slot | | | | | | | | | | |
|---|---|---|---|---|---|---|---|---|---|---|---|
| | t0 | t1 | t2 | t3 | t4 | t5 | t6 | t7 | t8 | t9 | t10 |
| Tone 0 | C0 (16-QAM) | C4 | C3 | C2 | C1 | C0 | C4 | C3 | C2 | C1 | C0 |
| Tone 1 | C1 (16-QAM) | C0 | C4 | C3 | C2 | C1 | C0 | C4 | C3 | C2 | C1 |
| Tone 2 | C2 (64-QAM) | C1 | C0 | C4 | C3 | C2 | C1 | C0 | C4 | C3 | C2 |
| Tone 3 | C3 (64-QAM) | C2 | C1 | C0 | C4 | C3 | C2 | C1 | C0 | C4 | C3 |
| Tone 4 | C4 (64-QAM) | C3 | C2 | C1 | C0 | C4 | C3 | C2 | C1 | C0 | C4 |

Fig. 8

| Sub-transmission Line | Time Slot | | | | | | | | | | |
|---|---|---|---|---|---|---|---|---|---|---|---|
| | t0 | t1 | t2 | t3 | t4 | t5 | t6 | t7 | t8 | t9 | t10 |
| Tone 0 | C0 (16-QAM) | C3 | C0 | C1 | C2 | C4 | C0 | C1 | C3 | C0 | C1 |
| Tone 1 | C1 (16-QAM) | C2 | C4 | C4 | C3 | C3 | C2 | C0 | C0 | C3 | C2 |
| Tone 2 | C2 (64-QAM) | C0 | C2 | C0 | C4 | C1 | C1 | C3 | C1 | C2 | C4 |
| Tone 3 | C3 (64-QAM) | C4 | C1 | C3 | C1 | C0 | C4 | C2 | C4 | C4 | C3 |
| Tone 4 | C4 (64-QAM) | C1 | C3 | C2 | C0 | C2 | C3 | C4 | C2 | C1 | C0 |

Fig. 9

EP 1 906 579 A2

Fig. 10

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5479447 A
- US 5596604 A
- US 6075821 A
- US 6985534 B